# EUROPÄISCHE PATENTANMELDUNG

(11) **EP 0 691 386 A1**
(43) Veröffentlichungstag der Anmeldung: **10.01.1996**
(21) Anmeldenummer: 95107635.5
(22) Anmeldetag: 19.05.1995
(51) Int. Cl.: C09D 11/16

(54) **Pigmenthaltige Tinte auf Wasserbasis**

(30) Priorität: 04.06.1994 DE 4419654
(71) Anmelder: Schwan-STABILO Schwanhäusser GmbH & Co., D-90409 Nürnberg (DE)
(72) Erfinder: Oelschlegel, Günther, D-90768 Fürth (DE); Schweizer, Manfred, D-90542 Eckental (DE)
(74) Vertreter: Segeth, Wolfgang

(57) **Zusammenfassung**

Es wird eine pigmenthaltige Tinte auf Wasserbasis beschrieben, die zur Verwendung auf Unterlagen mit geschlossener oder saugfähiger Oberfläche vorgesehen ist. Sie besteht aus einer Mischung aus folgenden Bestandteilen:
a) Organische und/oder anorganische Pigmente mit einer durchschnittliche Teilchengrösse von maximal 5µ;
b) eine bei Anwendungstemperatur der Tinte und Lagerungstemperatur der mit der Tinte beschrifteten Unterlage nicht-verfilmenden Kunstharzdispersion;
c) eine bei Anwendungstemperatur der Tinte und Lagerungstemperatur der mit der Tinte beschrifteten Unterlage verfilmenden Kunstharzdispersion, wobei deren Anteil in der Tinte wesentlich unter dem Anteil der Kunstharzdispersion gemäss b) liegt; und
d) eine Wasser in Öl-Emulsion

## Beschreibung

Die Erfindung betrifft eine anorganische und/oder organische Pigmente enthaltende Tinte auf Wasserbasis. Ihr liegt die Aufgabe zugrunde, eine Tinte dieser Art zur Verfügung zu stellen, die sich universell, d. h. auf verschiedenen Schreibunterlagen, wie z. B. emaillierte Tafeln, (sog. Whiteboards), Glastafeln (sog. Neonboards), spezielle Papierblätter (sog. Flip Charts) oder auf den für die Tageslicht-Projektion (sog. Overhead-Projektion) eingesetzten Kunststoff-Folien verwenden lässt. Dies setzt voraus, dass eine solche Tinte den unterschiedlichen, von den Eigenschaften der jeweils verwendeten Unterlagen abhängigen Anforderungen Rechnung trägt.

So soll bei Verwendung der Tinte auf Unterlagen mit geschlossener Oberfläche (z. B. Whiteboards) nach dem Trocknen der Tinte ein leichtes, rückstandsloses, trockenes Abwischen des Schriftzuges bzw. der Markierung möglich sein, wobei diese Eigenschaft möglichst lange (mehrere Wochen) erhalten bleiben soll. Darüberhinaus darf die Tinte beim Aufbringen auf glatten Oberflächen weder perlen noch sich zusammenziehen. Sie muss vielmehr einen gleichmässigen konturenscharfen Strich hinterlassen.

Bei Verwendung der Tinte auf einer saugfähigen Unterlage (z. B. Flip Charts) muss ein guter Tintenfluss gewährleistet sein. Die Tinte darf nicht durchschlagen und muss einen farbkräftigen, konturenscharfen Schriftzug auf dem Papier hinterlassen.

Beim Auftragen der Tinte auf Folien, z. B. für die Overhead-Projektion, muss der Tintenstrich auch nach dem Auftrocknen transparent und farbbrilliant sein, so daß die Farbe bei der Projektion deutlich erkennbar ist.

Eine Tinte, welche all diesen vielfältigen Anforderungen Rechnung trägt, stand bislang nicht zur Verfügung. Es wurden deshalb für die verschiedenen Verwendungszwecke Tinten unterschiedlicher Zusammensetzung benutzt. Abgesehen von dem damit verbundenen erhöhten Aufwand ergaben sich immer wieder Verwechslungen der mit den verschiedenen Tinten bestückten Schreibgeräte, so dass für die jeweilige Unterlage eine falsche Tinte verwendet wurde.

Solche, nur begrenzt einsetzbare Tinten sind beispielsweise in den DE-OSen 25 12 734 und 29 01 725 beschrieben. Sie sind auf Lösungsmittelbasis aufgebaut und daher in physiologischer Hinsicht bedenklich und aus ökologischen Gründen unerwünscht.

Tinten auf Wasserbasis zur Verwendung auf speziellen Unterlagen sind aus den DE-OSen 39 38 001, 30 41 769 und 33 07 743 bekannt.

Bei der Lösung der eingangs beschriebenen Aufgabe bestand die Vorgabe darin, dass die pigmenthaltige Tinte auf Wasserbasis aufgebaut sein sollte.

Gegenstand der Erfindung ist eine pigmenthaltige Tinte auf Wasserbasis zur Verwendung auf Unterlagen mit geschlossener oder saugfähiger Oberfläche, gekennzeichnet durch eine Mischung aus folgenden Bestandteilen:
a) Organische und/oder anorganische Pigmente mit einer durchschnittlichen Teilchengrösse von maximal 5µ;
b) eine bei Anwendungstemperatur der Tinte und Lagerungstemperatur der mit der Tinte beschrifteten Unterlage nicht-verfilmenden Kunstharzdispersion;
c) eine bei Anwendungstemperatur der Tinte und Lagerungstemperatur der mit der Tinte beschrifteten Unterlage verfilmenden Kunstharzdispersion, wobei deren Anteil in der Tinte wesentlich unter dem Anteil der Kunstharzdispersion gemäß b) liegt; und
d) eine Wasser in Öl-Emulsiion.

Dabei ermöglicht der Einsatz von extrem fein vermahlten Pigmentteilchen in der Tinte, eine vergleichsweise hohe Pigmentkonzentration - bis beispielsweise zu 15 Gew.-% - einzustellen und damit dem Erfordernis Rechnung zu tragen, mit der Tinte kräftige, satte Farbtöne erzielen zu können. Im allgemeinen ist ein Pigmentanteil in der Tinte zwischen 2 und 8 Gew.-% ausreichend, um auf Folien einen genügend transparenten und auf Papier und Whiteboards ausreichend deckende Abstriche zu erzielen. Die durchschnittliche Teilchengrösse der Farbkörper liegt zweckmässig im Bereich von 0,01 bis 5µm, vorzugsweise zwischen 0,05 und 2µm.

Probleme, die sich aus der Verwendung von derart feinteiligen Pigmenten ergeben könnten, wie z. B. Verschmieren, Einfärben der Unterlagen, Schattenbildung (wie sie auch bei Teilchengrößen über 5µm auftreten können), lassen sich erfindungsgemäss überraschenderweise durch den Zusatz einer nicht-verfilmenden und einer verfilmenden Kunstharzdispersion zur Tinte ausschalten. Durch die Verwendung der nicht-verfilmenden Kunstharzdispersion, deren Mindestfilmtemperatur möglichst hoch sein sollte (mindestens 50° Celsius), wird zusätzlich die trockene Abwischbarkeit des Tintenabstrichs erleichtert. Der Anteil der verfilmenden Harzdispersion in der Tinte soll deshalb deutlich unter demjenigen der nichtverfilmenden Harzdispersion liegen, damit die Haftung des Tintenabstrichs auf der glatten Oberfläche des Untergrunds nicht unnötig verstärkt wird. Es hat sich gezeigt, dass die Mitverwendung einer vergleichsweise geringen Menge einer verfilmenden Harzdispersion in der Tinte die Transparenz des Tintenabstrichs deutlich verbessert. Die Mindestfilmtemperatur der verfilmenden Harzdiserpersion sollte unter 40° Celsius liegen.

Der Anteil der nicht-verfilmenden Harzdispersion in der Tinte sollte mindestens das 5-fache des Anteils der verfilmenden Harzdispersion betragen. Insbesondere beträgt das Anteilsverhältnis von verfilmendem Kunstharz zu nichtverfilmendem Kunstharz 1:10 bis 1:50.

Bezogen auf das Kunstharz als Trockenbestandteil liegt der Anteil des nicht-verfilmenden Kunstharzes in der Tinte zweckmässig zwischen 3 und 25 Gew.-% und derjenige der verfilmenden Harzdispersion zweckmässig zwischen 0,1 und 5 Gew.-%. Vorzugsweise betragen die Anteile 6 - 15 Gew.-% bzw. 0,5 - 2 Gew.-%.

Für die Zwecke der Erfindung haben sich Dispersionen auf der Basis von Polyacrylaten und/oder Polystyrol sowie deren Mischpolymerisaten als besonders geeignet erwiesen. Für den Fall, dass für die nicht-verfilmende und die verfilmende Harzdispersion dasselbe Polymerisat verwendet wird, lassen sich die Verfilmungseigenschaften durch den Polymerisationsgrad regulieren. Je höher der Polymerisationsgrad ist, desto höher liegt die Mindestfilmtemperatur.Als nicht-verfilmende Kunstharzdispersion ist insbesondere eine Polystroldispersion zweckmäßig.

Für die Verwirklichung der Zielvorstellungen der Erfindung erweist es sich als vorteilhaft, Pigmente zu verwenden, die mit einem dünnen Harzüberzug, vorzugsweise aus Acrylatharz, versehen sind. Der Harzüberzug kann im Zuge der Vermahlung des Pigments auf die erfindungsgemäss gewünschte Teilchengrösse aufgebracht werden. Erfindungsgemäß werden die Pigmentteilchen der Tinte vorzugsweise als Kunstharzdispersion, z.B. auf Polyacrylbasis zugesetzt. Solche Dispersionen sind auf dem Markt erhältlich, auch solche, welche die Pigmentteilchen in der gewünschten Feinheit enthalten. Ihr Pigmentanteil liegt im allgemeinen zwischen 50 und 60 Gew.-%.

Für die Balance zwischen ausreichender Haftung des Tintenabstrichs auf Unterlagen mit glatter Oberfläche (Whiteboard, Folien für Overhead-Projektion, Neonboards) und leichter Abwischbarkeit des Abstrichs von der Unterlage ist auch die in der erfindungsgemässen Tinte enthaltene W/O-Emulsion wesentlich. Als hydrophober Bestandteil bzw. Bestandteile der Emulsion kommen fettartige Stoffe in Betracht, worunter in diesem Zusammenhang tierische und pflanzliche Fette und Öle, sowie mineralische Fette und Öle sowie deren synthetische Ersatzprodukte verstanden sein sollen. Des weiteren eignen sich die Ester von Dicarbonsäuren, Phosphorsäure und Schwefelsäure mit langkettigen Alkoholen, die eine gradkettige oder verzweigte C₄-₃₀-Alkylkette besitzen, sowie Silikonöl für diesen Zweck. Als besonders geeignet haben sich Paraffinöle, Kokosöl und Naphthene erwiesen. Der Anteil der hydrophoben Bestandteile in der Emulsion kann 1 bis 15 Gew-%, vorzugsweise 2 - 10 Gew.-% betragen. Bei Verwendung von hydrophoben Bestandteilen fester Konsistenz, z. B. Wachsen, wird die Emulsion oberhalb des Schmelzpunktes dieses Bestandteils hergestellt.

Als Emulgatoren für die erfindungsgemäss eingesetzte Emulsion kommen vorzugsweise nicht-ionogene Verbindungen, insbesondere Additionsprodukte von langkettigen Fettalkoholen und Ethylenoxid, sogenannte Fettalkoholpolyglykolether, ferner perfluorierte Tenside in Betracht. Die Emulsion ist so einzustellen und zu stabilisieren, dass die Transparenz des trockenen Tintenabstrichs nicht beeinträchtigt wird. Es ist ferner darauf zu achten, dass durch sie die Mindestfilmtemperatur der nicht-verfilmenden Kunstharzdispersion nicht bis in einen Verfilmungstemperaturbereich herabgesetzt wird.

Für manche Zwecke bzw. Zusammensetzungen eignen sich auch anionenaktive Emulgatoren, wie z. B. Na-Aminocarbonsäure oder Natriumsalze der Sulfobernsteinsäure.

Zur Verbesserung der Offenlagerfähigkeit kann die erfindungsgemässe Tinte die üblichen Zusätze, wie z.B. Glykole oder deren Mono- oder Diether, Mono-Di- oder Tri-Saccharide oder die sich von ihnen ableitenden Polyalkohole, z.B. Sorbitol, Glycerin, Aminosäuren, Harnstoff oder dessen Derivate, klarlösliche harzartige Acrylcopolymere oder Gemische der genannten Verbindungen.

Zur Regulierung der Oberflächenspannung und damit auch der Fliessfähigkeit der Tinte können ihr Tenside, z. B. solche auf Silikonbasis oder fluorierte Kohlenwasserstoffe, zugesetzt werden. Dadurch wird auch einem Perlen beim Auftragen der Tinte auf einer glatten Unterlage entgegengewirkt.

Da die erfindungsgemässe Tinte auf Wasserbasis aufgebaut ist - ihr Wassergehalt kann 50 bis 90 Gew.-% betragen - trägt sie auch ökologischen Anforderungen Rechnung. Im Vergleich zu lösungsmittelhaltigen Tinten schlägt sie beim Auftragen auf Papier nicht durch.
Zur Herstellung der erfindungsgemässen Tinte geht man zweckmässigerweise von verschiedenen Stammlösungen aus, aus denen anschliessend die fertige Tinte hergestellt wird. Es versteht sich, daß auch die in der erfindungsgemäßen Tinte enthaltene Emulsion zu diesen Stamm"lösungen" zu rechnen ist. Die Anteilsangaben in den nachfolgenden Beispielen beziehen sich auf Gew.-%.

Bei der Kompondierung der erfindungsgemäßen Tinte ist darauf zu achten, daß die Mindestfilmtemperatur der verwendeten nicht-verfilmenden Kunstharzdispersionen nicht so weit herabgesetzt wird, daß dadurch die mit der Erfindung angestrebten Eigenschaften in Frage gestellt werden. Zweckmäßigerweise enthält die erfindungsgemäße tinte ein Feuchthaltemittel.
Bei einer vorzugsweisen Ausführungsform der Erfindung wird die Offenlagerfähigkeit der Tinte durch gleichzeitig Tensidcharakter aufweisende Amidocarbonsäuren verbessert, die gleichzeitig als Feuchthaltemittel wirken. Sie können auch, wie bereits erwähnt, zur Herstellung der erfindungsgemäss verwendeten Emulsion eingesetzt werden.

Bei den in der nachstehenden Tabelle angegebenen Rezepturbeispielen wurden folgende Pigmente eingesetzt:
Beisp. 1: C.I. Pigment Red No. 166 C.I.-No. -.-(Rot)
Beisp. 2: C.I. Pigment Blue No. 15:3 C.I.-No. 74.160 (Blau)
Beisp. 3: C.I. Pigment Violet No. 23 C.I.-No. 51.319 (Violet)
Beisp. 4: C.I. Pigment Black No. 7 C.I.-No.77.266 (Schwarz)
Beisp. 5: C.I. Pigment Yellow No. 83 C.I.-No. -.- (Dkl.-Gelb)
Beisp. 6: C.I. Pigment Yellow No. 93 C.I.-No. -.-(Hellgelb)

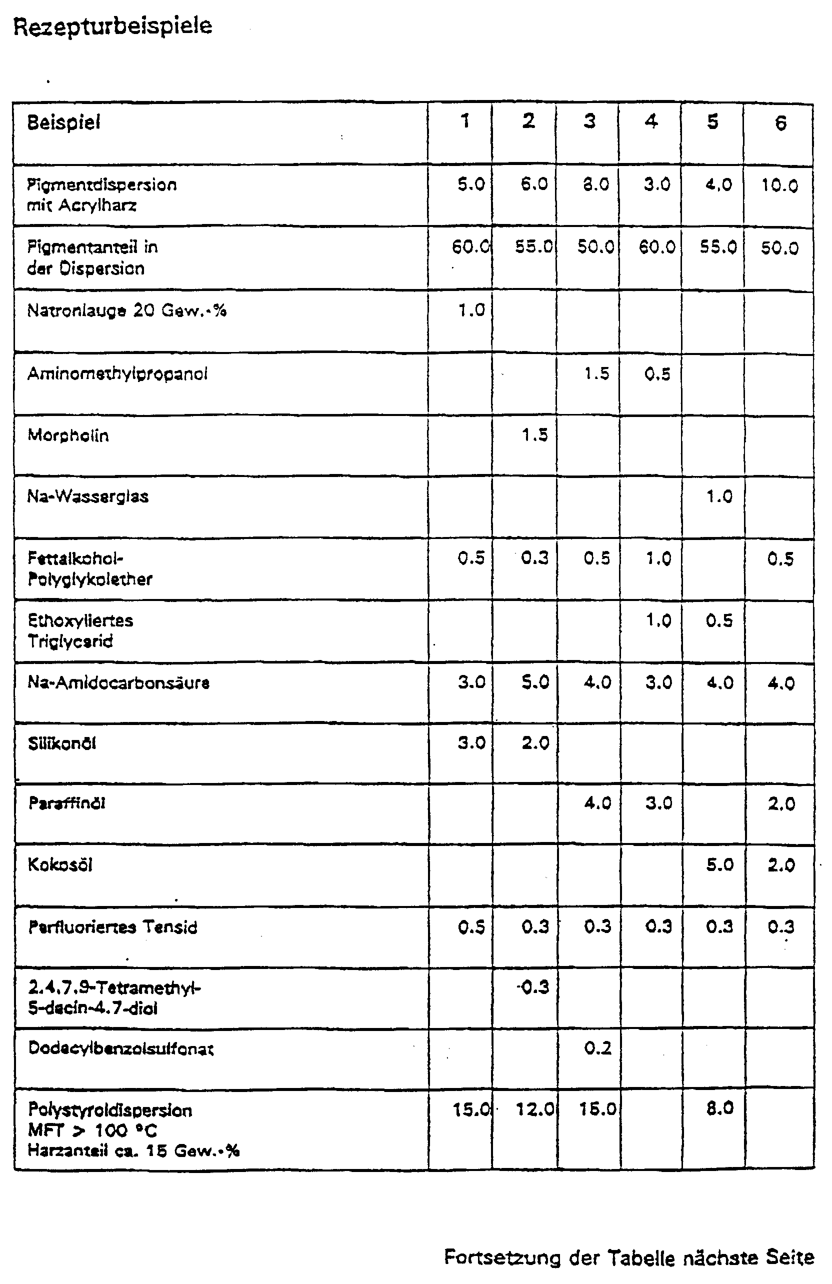

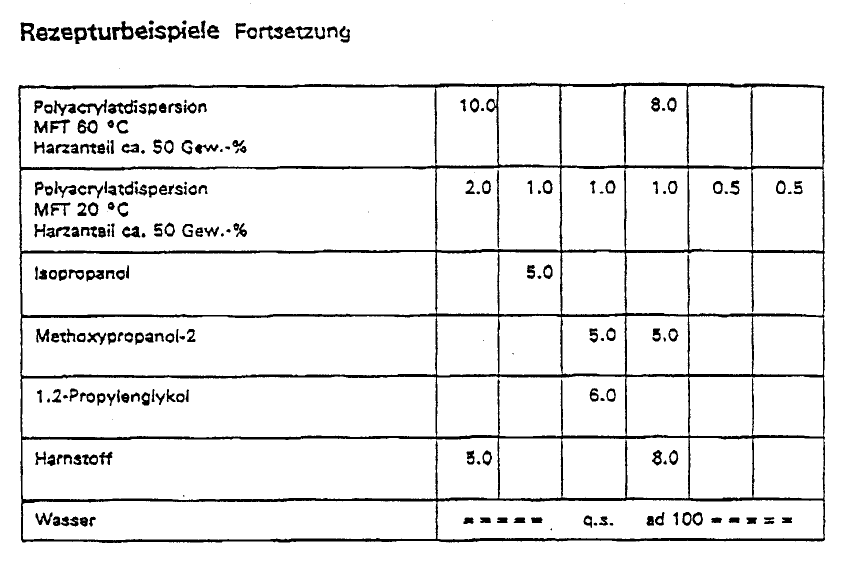

## Patentansprüche

1. Pigmenthaltige Tinte auf Wasserbasis zur Verwendung auf Unterlagen mit geschlossener oder saugfähiger Oberfläche, gekennzeichnet durch eine Mischung aus folgenden Bestandteilen:
a) Organische und/oder anorganische Pigmente mit einer durchschnittliche Teilchengrösse von maximal 5µ;
b) eine bei Anwendungstemperatur der Tinte und Lagerungstemperatur der mit der Tinte beschrifteten Unterlage nicht-verfilmenden Kunstharzdispersion;
c) eine bei Anwendungstemperatur der Tinte und Lagerungstemperatur der mit der Tinte beschrifteten Unterlage verfilmenden Kunstharzdispersion, wobei deren Anteil in der Tinte wesentlich unter dem Anteil der Kunstharzdispersion gemäss b) liegt; und
d) eine Wasser in Öl-Emulsion

2. Tinte nach Anspruch 1, dadurch gekennzeichnet, daß die Teilchengröße der Pigmente im Bereich zwischen 0,05µm und 2µm wiegt.

3. Tinte nach einem oder beiden der vorhergehenden Ansprüche, dadurch gekennzeichnet, daß die Pigmente der Tinte als nicht-verfilmende und verfilmende Harzdispersion zugesetzt sind.

4. Tinte nach Anspruch 3, dadurch gekennzeichnet, daß eine Pigmentdispersion auf Polyacrylharzbasis verwendet wird.

5. Tinte nach einem oder mehreren der vorhergehenden Ansprüche, dadurch gekennzeichnet, daß die Mindestfilmtemperatur (MFT) der verwendeten nichtverfilmenden Kunstharzdispersion mindestens 50°C beträgt.

6. Tinte nach einem oder mehreren der vorhergehenden Ansprüche, dadurch gekennzeichnet, daß die Mindestfilmtemperatur (MFT) der verfilmenden Kunstharzdispersion unterhalb 40°C liegt.

7. Tinte nach einem oder mehreren der vorhergehenden Ansprüche, dadurch gekennzeichnet, daß die Tinte als nichtverfilmende und verfilmende Kunstharzdispersionen solche mit unterschiedlichem Polymerisationsgrad enthält.

8. Tinte nach einem oder mehreren der vorhergehenden Ansprüche, dadurch gekennzeichnet, daß die Tinte als nichtverfilmende Kunstharzdispersion eine Polystyroldispersion enthält.

9. Tinte nach einem oder mehreren der vorhergehenden Ansprüche, dadurch gekennzeichnet, daß der Anteil des nicht verfilmenden Kunstharzes in der Tinte zwischen 3 und 25 Gew.-% und der Anteil des verfilmenden Kunstharzes in der Dispersion zwischen 0,1 und 5 Gew.% beträgt.

10. Tinte nach Anspruch 9, dadurch gekennzeichnet, dass der Anteil des nicht verfilmenden Kunstharzes in der Dispersion zwischen 6 und 15 Gew.-% und der Anteil des verfilmenden Kunstharzes in der Dispersion zwischen 0,1 und 5 Gew.-% beträgt.

11. Tinte nach einem oder mehreren der vorhergehenden Ansprüche, dadurch gekennzeichnet, daß der Anteil des nichtverfilmenden Kunstharzes in der Dispersion mindestens das 5-fache des Anteils des verfilmenden Kunstharzes beträgt.

12. Tinte nach Anspruch 11, dadurch gekennzeichnet, daß das Anteilsverhältnis von verfilmenden Kunstharz zu nicht-verfilmenden Kunstharz 1:10 bis 1:50 beträgt.

13. Tinte nach einem oder mehreren der vorhergehenden Ansprüche, dadurch gekennzeichnet, daß sie ein Feuchthaltemittel enthält.

14. Tinte nach einem oder mehreren der vorhergehenden Ansprüche, dadurch gekennzeichnet, dass die Wasser in Öl Emulsion in einem nicht-ionogenen Emulgator zubereitet ist.
